# EUROPEAN PATENT APPLICATION

(11) **EP 0 918 390 A2**
(43) Date of publication of application: **26.05.1999**
(21) Application number: 98309437.6
(22) Date of filing: 18.11.1998
(51) Int. Cl.: H02J 5/00

(54) **Office workstation services**

(30) Priority: 19.11.1997 GB 9724423
(71) Applicant: Ackermann Limited, Milton Keynes, Buckinghamshire MK15 8HQ (GB)
(72) Inventor: Harrison, David Charles Peter, Nothamptonshire, NN29 7 NB (GB)
(74) Representative: Nash, Keith Wilfrid

(57) **Abstract**

Power supply apparatus for mobile electrical equipment, for example on a mobile office desk, includes a power receiving unit for receiving power in a cableless manner from a power transmitting unit in the floor. One embodiment of such apparatus comprises a mobile "plug" (24) adapted to be clamped to the floor with its receiving unit in alignment with the floor transmitting unit and a power cable (28) extending from the "plug" for connection to the electrical equipment.

## Description

### Field of the Invention

This invention relates generally to office workstation services.

### Background to the Invention

There is an increasing requirement in offices for flexibility in the work environment, especially in respect of mobility of office furniture. This leads to the requirement for flexibility in the supply of services to the furniture, i.e. supply of power, data communication and voice communication. The requirement of flexibility in voice communication can be satisfied by the use of mobile telephones, but the supply of power and communication of data presents more of a problem. The provision of power supply and data communication points distributed around the office space cannot always afford the total flexibility required.

### The Invention

According to one aspect of the invention, there is provided an office desk having at least one power point incorporated for the supply of power to electrical equipment to be placed on the desk, said power point having power supplied thereto from an energy system having a power receiving unit incorporated into the desk for receiving power in a cableless manner from a power transmitting unit incorporated into the floor beneath the desk.

One suitable cableless power coupling system for the desk is that described in Patent Application No. WO 94/28560, wherein separated primary and secondary windings are employed, the secondary winding being incorporated in a resonant circuit and the primary winding being tuned to the resonant frequency of the secondary (load) circuit, including the secondary winding leakage inductance. The primary (source) circuit can be tuned automatically to the resonant frequency by means of a phase-locked loop responsive to voltages and currents in the source and the load.

In such a situation, a large number of source units can be distributed over the floor of an office space substantially regardless of their locations, without risk of creating hazards from numerous physical power points and cables connected thereto. Moreover, repositioning of office desks and electrical equipment to be supported thereon is made easier and quicker.

According to another aspect of the invention, therefore, there is provided a cableless power supply system for an office wherein a large plurality of power source units are incorporated into the floor and office desks are equipped each with a power receiving unit which can be tapped into by electrical equipment to be mounted on the desk, the source units being capable of supplying power to the receiving units by means of a cableless power coupling.

The invention also relates to an office building having a floor into which power source units for supplying power in a cableless manner are incorporated.

In the office desk as aforesaid, data communication can be effected in known cableless manner by means of an infra-red data link. The desk may have data points incorporated which can be tapped into by equipment to be supported on the desk.

In use, it is only necessary to position the desk over a power source unit in the floor to render the power points on the desk operative.

Correct alignment of the desk over a power source unit can be facilitated by means of an indicator (lamp, buzzer, etc.) incorporated into the desk. The desk may also be castor mounted, and be equipped with a locking device to secure it in position over the source unit in the floor.

For a desk of more conventional design, or if a still greater degree of flexibility is required, a "mouse" pick-up may be used to establish a cableless power coupling with the source unit in the floor. From the mouse pick-up, a cable is used conventionally to supply power to equipment to be supported on the desk.

According to still another aspect of the invention, therefore, there is provided a power supply system for an office in which a large plurality of power source units are incorporated into the floor and power is taken from a source unit in a cableless manner by means of a mouse pick-up from which a power cable extends to supply power to office equipment.

The cableless connection between the source unit and the mouse pick-up may again be practised in the manner described in Patent Application No. WO 94/28560, as previously referred to.

The mouse may be adapted to grip the floor (at a source unit) by means of a hooked pile element or other securing means on its base, and it may be equipped with sensors for indicating when it is aligned with the source unit in the floor.

Having made possible a cableless connection between a power source unit and a specially adapted office desk incorporating power and data points which can be tapped into, a still further aspect of the invention is concerned with means for effecting a cableless connection between the desk power and data points and equipment to be placed on the desk.

According to this aspect of the invention, therefore, there is provided an office desk equipped with a seating for receiving and locating a computer or casing therefore, more especially but not necesssarily a lap-top computer, the seating and the computer or its casing being respectively provided with supply and receiver devices for power and/or data cableless coupling between the seating and the computer.

One mthod of practising this aspect of the invention is to provide the computer with an "attache case" which has been equipped with all the necessary devices for cableless power and/or data transfer. Assuming the desk is equipped with mating devices for such power and/or data transfer, the attache case may simply be dropped on to the desk. In the case, however, of a more conventional office desk, a docking station can be added to the desk and wired in conventional manner to a power and/or data system.

Although the invention has been described in relation to offices and desks, it is to be understood that the invention is applicable to any item of movable furniture such as an island unit for a kitchen, a workbench for a workshop, an island counter or display unit for a shop or museum, to which power and/or data are to be supplied. The invention is also applicable to musical instruments such as keyboards and sheet music desks for use by musicians which need electrical power to be supplied in use and from which data signals are to be conveyed for amplification.

### Description of Embodiment

The invention is further described with reference to the accompanying drawings, in which:-
Figure 1 illustrates in perspective a desk having cableless power and data supply;
Figure 2 shows the desk in more detail;
Figure 3 shows a mouse pick-up equipped to receive power by a cableless coupling;
Figures 4 and 5 show an attache case for a lap-top computer, for enabling contactless power and data transfer; and
Figure 6 shows a docking station for a computer, equipped for cableless power and data transfer thereto.

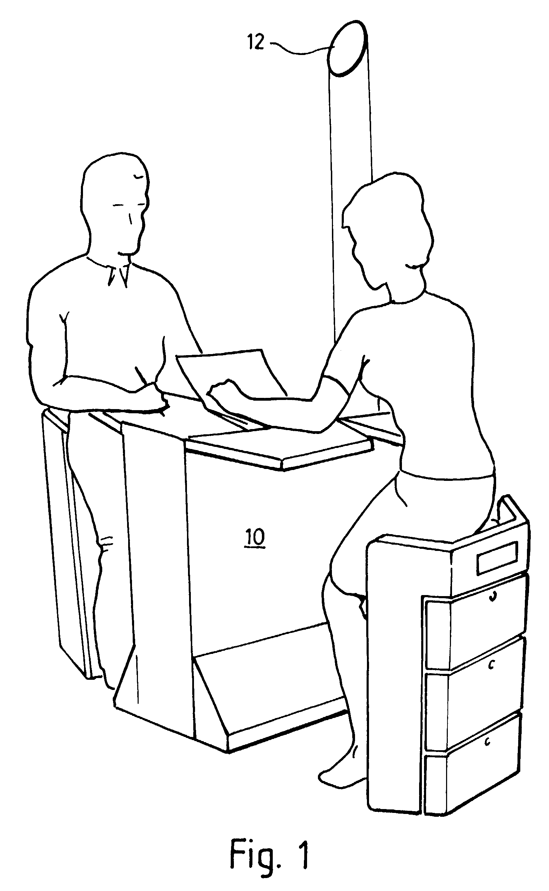

Referring to the drawings, Figure 1 shows a specially designed, occasional use, office desk 10 equipped with means for cableless power and data transfer thereto. Data transfer is conventional by means of an infra-red data link 12.

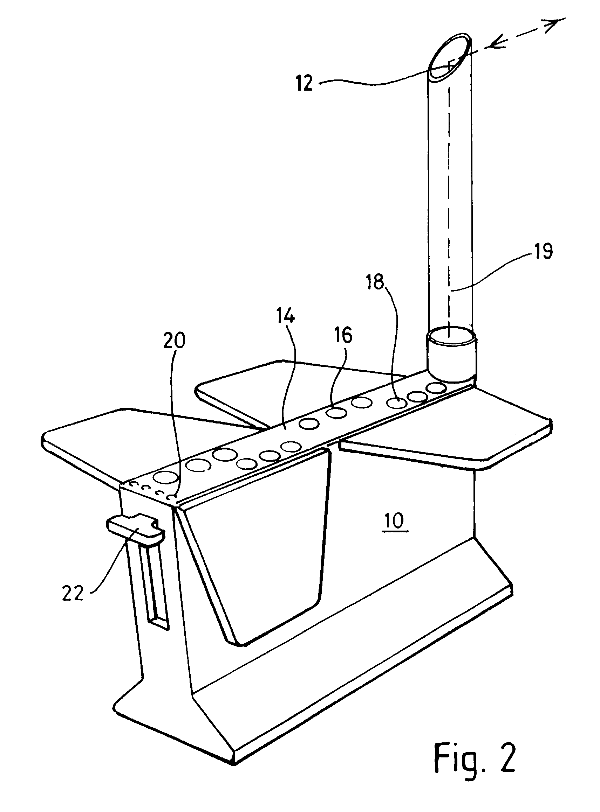

As shown in Figure 2, the desk 10 is provided with folding flaps and between them a services supply bar 14 having contact points 16 for data communication and contact points 18 for power supply. The infra-red data link to the desk is by means of acrylic tube 19.

For supply of power, the desk incorporates a power receiving unit which is adapted to couple in cableless manner with a power transmitting unit incorporated into the floor. The power coupling system of Patent Application No. WO 94/28560, hereinbefore briefly described, is suitable for this purpose.

The desk 10 is castor mounted, and includes a sensor and indicator 20 therefor to indicate when the desk is correctly located over a floor transmitter, and a locking device 22 for securing the desk to the floor in the correct location.

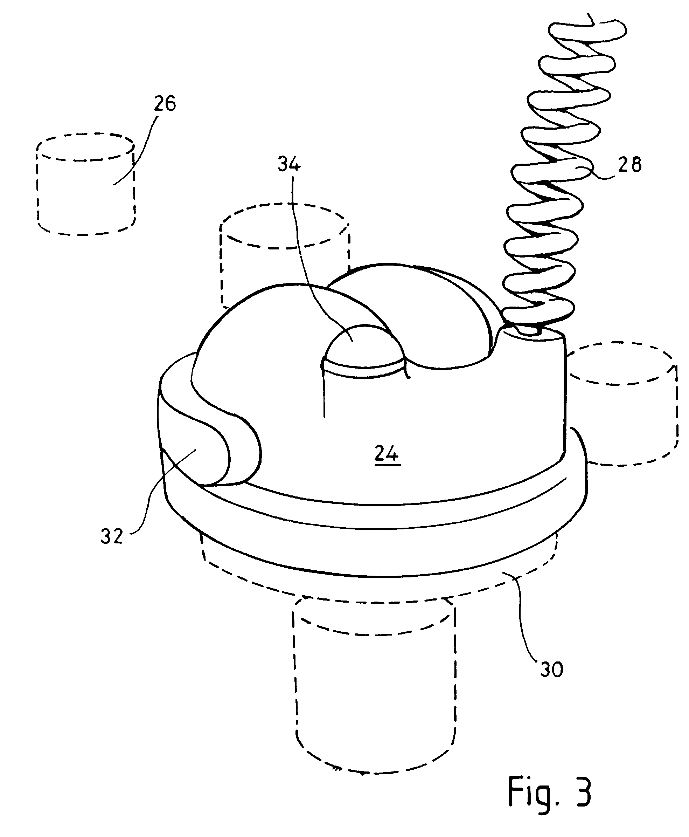

In the case of a more conventional office desk, cableless power coupling with a floor transmitter may be effected by means of the mouse pick-up 24 shown in Figure 3. The pick-up 24 incorporates a receiver unit for cableless coupling with a transmitter unit 26 in the floor, for example by means of the power coupling system described in Patent Application No. WO 94/28560, and power supply from the pick-up to the desk equipment is by means of power cable 28. The mouse pick-up 24 has means for securing it over a floor transmitter 26, such as hooked pile grip ring 30, and a folding handle 32 which clamps the pick-up to the floor in the correct location, indicated by indicator 34.

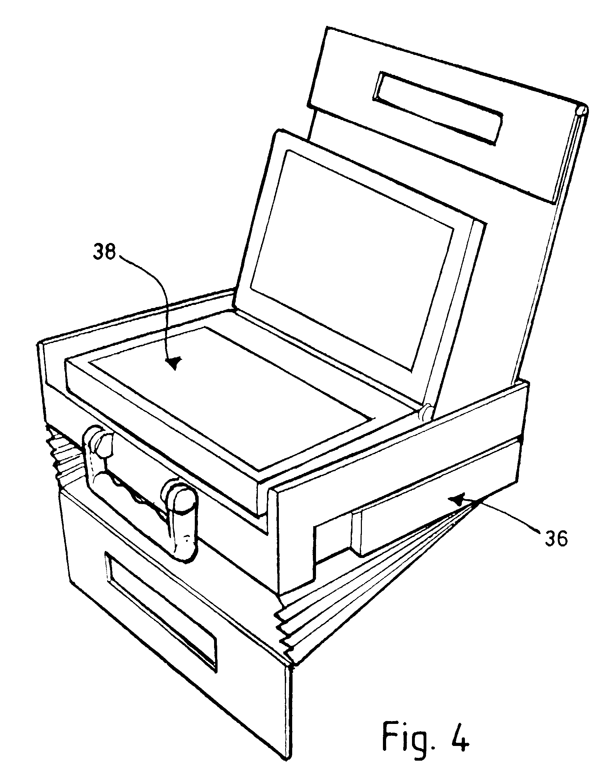

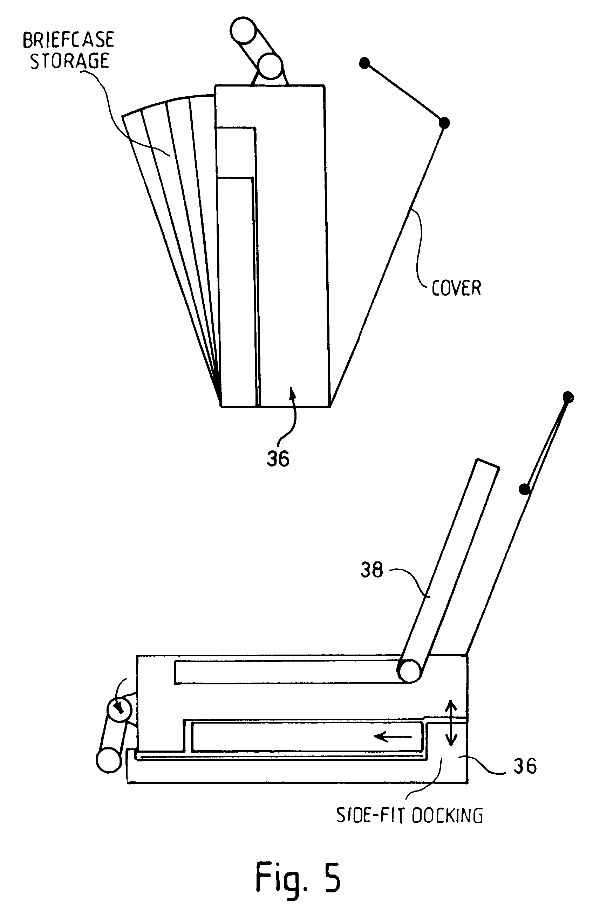

Figures 4 and 5 illustrate a computer case 36 for receiving a lap-top computer 38. The case is equipped with the means necessary for cableless power and data transfer thereto, and in the event of a correspondingly equipped desk can simply be dropped into position.

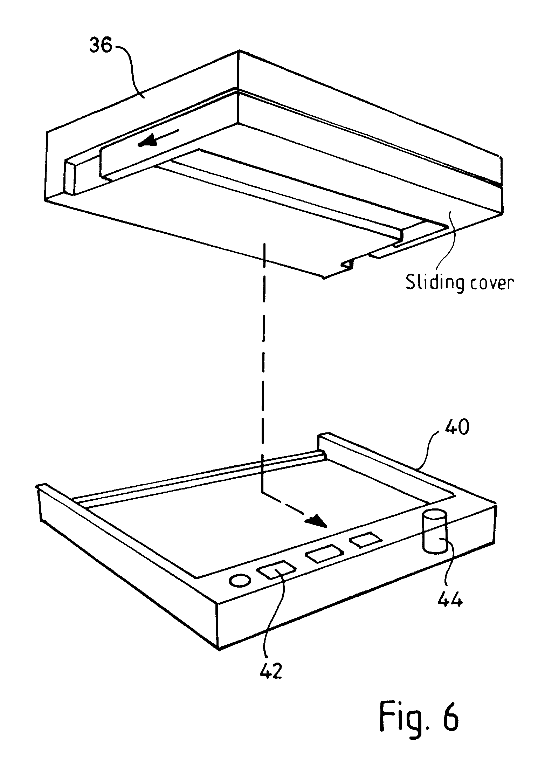

In the case of a more conventional office desk, then as shown in Figure 6, a docking station 40 to receive the computer case, and enable cableless power and data transfer thereto, may be provided on the desk. In Figure 6, the infra-red data communication points 42 on the docking station, as well as a power point 44, are indicated. The mobile lap-top computer housing 36 slides into its correct location in the docking station 40.

## Claims

1. Power supply apparatus for supplying power to mobile electrical equipment, said power supply apparatus comprising a power receiving unit for receiving power in a cableless manner from a power transmitting unit incorporated into the floor.

2. Power supply apparatus according to claim 1, including means for correctly locating the receiving unit in alignment with the power transmitting unit.

3. Power supply apparatus according to claim 2, wherein the alignment means includes an alignment sensor and an alignment indicator.

4. Power supply apparatus according to claim 2 or claim 3, wherein the alignment means also includes fastening means for securing the apparatus in the position in which the receiving unit is correctly aligned with the transmitting unit.

5. Power supply apparatus according to any of claims 1 to 4, comprising a mobile "plug" for securing to the floor and having a cable attached thereto for conveying power from the receiving unit to adjacent electrical equipment.

6. Power supply apparatus according to claim 5, wherein the mobile "plug" secures to the floor by means of a grip ring and clamping means.

7. Power supply apparatus according to claim 6, wherein the grip ring is a hooked pile grip ring.

8. Power supply apparatus according to claim 7, wherein the clamping means is a folding handle.

9. Power supply apparatus according to any of claims 1 to 4, comprising a desk incorporating the power receiving unit and having at least one power take-off point supplied with power from the receiving unit.

10. Power supply apparatus according to claim 9, wherein the desk is provided with an infra-red data link.

11. Power supply apparatus according to claim 1 or claim 2, comprising a desk equipped with a seating for locating a computer or casing therefor, such as a lap-top computer casing, the seating and the computer or its casing respectively incorporating said power transmitting and power receiving units providing electrical power transfer in a cableless manner.

12. Power supply apparatus including a desk equipped with at least one docking station for electrical equipment to be conventionally wired to the mobile "plug" of claim 6 or the at least one power take-off point of claim 9.

13. Power supply apparatus according to claim 1, wherein cableless power transfer to the power receiving unit takes place by means of a coupling between primary and secondary electrical windings.
